# EUROPEAN PATENT SPECIFICATION

(11) **EP 2 081 195 B1**
(45) Date of publication and mention of the grant of the patent: **26.10.2011**
(21) Application number: 07831375.6
(22) Date of filing: 07.11.2007
(51) Int. Cl.: H01B 1/06, C08F 8/12, C08F 220/44, C08F 228/02, H01M 8/02, H01M 8/10

(54) **SOLID POLYELECTROLYTE, PROCESS FOR PRODUCTION THEREOF, AND MEMBRANE/ELECTRODE ASSEMBLY FOR FUEL CELLS MADE BY USING THE POLYELECTROLYTE**
FESTPOLYELEKTROLYT, PROZESS ZU SEINER HERSTELLUNG UND DURCH VERWENDUNG DES POLYELEKTROLYTS HERGESTELLTE MEMBRAN-ELEKTRODENBAUGRUPPE FÜR BRENNSTOFFZELLEN
POLYÉLECTROLYTE SOLIDE, SON PROCÉDÉ DE PRODUCTION, ET ENSEMBLE MEMBRANE/ÉLECTRODE POUR PILES À COMBUSTIBLE RÉALISÉ AU MOYEN DU POLYÉLECROLYTE

(30) Priority: 07.11.2006 JP 2006301513
(43) Date of publication of application: 22.07.2009
(73) Proprietor: Toyota Jidosha Kabushiki Kaisha, Toyota-shi Aichi 471-8571 (JP)
(72) Inventor: TAKAMI, Masayoshi, Toyota-shi Aichi 471-8571 (JP); YOSHIDA, Toshihiko, Toyota-shi Aichi 471-8571 (JP); UEDA, Masahiro, Kyoto-shi Kyoto 600-8813 (JP)
(74) Representative: Duckworth, Timothy John
(86) International application number: PCT/JP2007/071644
(87) International publication number: WO 2008/056704

(56) References cited:
- WO-A1-03/062493
- GB-A- 796 199
- JP-A- 11 302 410
- JP-A- 2001 283 635
- JP-A- 2005 048 088
- JP-A- 2005 310 389
- JP-A- 2005 502 990
- US-A- 5 741 611
- US-A1- 2002 127 454

## Description

### Technical Field

The present invention relates to a solid polymer electrolyte, a method for production thereof, and a membrane electrode assembly for fuel cell provided with a polymer electrolyte membrane and/or an electrode containing the solid polymer electrolyte.

### Background Art

Fuel cells convert chemical energy directly into electrical energy by providing fuels and oxidants to two electrically-connected electrodes, and causing electrochemical oxidation of the fuels. Unlike thermal power, the fuel cells show high energy conversion efficiency since it is not subject to the restriction of Carnot cycle. The fuel cells generally have a structure provided with plurality of stacked unit cells, each having a fundamental backbone of a membrane electrode assembly in which an electrolyte membrane is interposed between a pair of electrodes. In particular, a solid polymer electrolyte fuel cell using a solid polymer electrolyte membrane as the electrolyte membrane has advantages in easiness to downsize and workability at low temperature and the like, and hence attracts attention particularly to employments of the solid polymer electrolyte fuel cells as portable and mobile power supply.

In the solid polymer electrolyte fuel cells, reaction of formula (3) proceeds at an anode (fuel electrode).

H₂ → 2H⁺ + 2e⁻ (3)

An electron which generates in the formula (3) reaches at a cathode (oxidant electrode) after passing through an external circuit and working at an outside load. Then, protons generated in the formula (3) in a state of hydration with water move inside of the solid polymer electrolyte membrane from its anode side to its cathode side by electro-osmosis.
On the other hand, reaction of formula (4) proceeds at the cathode.

4H⁺ + O₂ ⁺ 4e⁻ → 2H₂O (4)

As the solid polymer electrolyte membrane (hereinafter, it may be referred to as a polymer electrolyte membrane) , there has been conventionally and preferably used a fluorinated polymer electrolyte membrane such as a perfluorocarbon sulfonic acid resin membrane which is represented by Nafion (product name, manufactured by DuPont), Aciplex (product name, manufactured by Asahi Kasei Co. , Ltd. ) and Flemion (product name, manufactured by Asahi Glass Co., Ltd.) because of its excellent properties such as proton conductivity and chemical stability which are required for the electrolyte membrane.

However, fluorinated polymer electrolytes are one of factors that prevent cost reduction because of extremely expensive prices thereof. In addition, the fluorinated polymer electrolytes may increase environmental burden as containing fluorine. Therefore, researches and developments of a polymer electrolyte which is low cost and has a low content of fluorine compared to the fluorinated polymer electrolytes have been promoted. Examples of the polymer electrolyte are an aromatic hydrocarbon polymer electrolyte in which proton-conducting groups such as sulfonic acid groups, carboxyl groups and phosphoric acid groups are introduced into hydrocarbon polymers containing aromatic rings or imide rings in a main chain such as polyether ether ketone (PEEK), polyether ketone (PEK), polyether sulfone (PES) and polyphenylene sulfide (PPS).

Although the cost of the aromatic hydrocarbon polymer electrolytes is low compared with that of the fluorinated polymer electrolytes, the cost of the aromatic hydrocarbon polymer electrolytes is not sufficiently low to achieve cost reduction of the fuel cells. Also, there is a problem that aromatic hydrocarbon polymers contain aromatic rings in a main chain or side chain so that a glass transition temperature is high. Therefore, a polymer electrolyte membrane and an electrode (catalyst layer) containing the aromatic hydrocarbon polymer electrolyte are hard to succeed hot press and are difficult to obtain sufficient bonding ability between the polymer electrolyte membrane and the electrode. The bonding between the polymer electrolyte membrane and the electrode is an important factor that has great impacts on proton conductivity, water mobility or the like between the polymer electrolyte membrane and the electrode, and has great influence on power generation performance of a membrane electrode assembly.

A specific example of the aromatic hydrocarbon polymer electrolyte is sulfonated polyether ether ketone (S-PEEK) disclosed in Patent Literature 1. S-PEEK has a problem of inferior oxidation resistance and insufficient durability, since an oxygen atom which forms a main chain is easily attacked by radicals with strong oxidative power such as peroxide radical, besides having the above-described problem of a high glasstransitiontemperature. Furthermore, the main chain bonded with a sulfonic acid group is bulky so that a density (ion-exchange capacity) of the sulfonic acid group in the polymer is unable to increase.

Patent Literature 2 discloses a polymer compound in which a fundamental backbone formed with membrane formation monomer unit I, membrane formation monomer unit II, an orientation monomer unit, an ion conductor monomer unit and an amphiphilic monomer unit, and having a main chain made of ethylene chain, is branched by a specific tetravalent cross-linking monomer unit. The polymer compound disclosed in the Patent Literature 2 necessarily contains an aromatic ring at a cross-linking position. In addition, the membrane formation monomer unit I and the orientation monomer unit preferably contain an aromatic ring. In other words, the polymer compound disclosed in the Patent Literature 2 contains aromatic rings in a side chain or at a cross-linking position, and therefore is inferior in cost performance.

Patent Literature 2 discloses that the membrane formation monomer I (a polymerizable monomer having a tert-butyl group) is the most characteristic repeating unit among repeating units composing the polymer compound, wherein the membrane formation monomer I traps radicals and exhibits radical stability so as to function as a strength retention component. It is also mentioned that the membrane formation monomer unit I is preferably a repeating unit derived from a vinyl group which is bonded with styrene substituted by a tert-butyl group. However, such membrane formation monomer unit I has a problem that the above described effect of the membrane formation monomer unit I cannot be exhibited over the long term since aromatic rings (styrene) bonded in a pendant shape are easily cutoff from the main chain.

[Patent Literature 1] Japanese translation of PCT international application No. 2001-525471
[Patent Literature 2] Japanese Patent Application Laid-Open (JP-A) No. 2005-48088

### Summary of Invention

### Technical Problem

The present invention has been achieved in view of the above circumstances, and an object of the present invention is to provide a low-cost solid polymer electrolyte having a low glass transition temperature and excellent proton conductivity. Another object is to provide a method for producing the solid polymer electrolyte and a membrane electrode assembly using the solid polymer electrolyte.

### Solution to Problem

The solid polymer electrolyte of the present invention is a copolymer represented by the following formula (1).

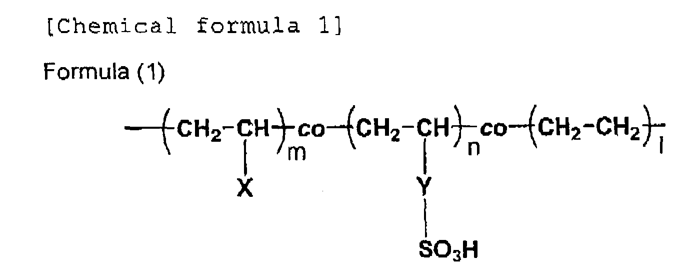

In the formula (1), X is -CN , Y is a single bond or - (CH₂) ₚ-, p is 1 to 10, m, n and 1 represent a copolynerisation ratio of each repeating unit, m+n+1=10, m>0, n>0, 1≧ 0 and wherein n:m = 9 to 2 : 1 to 8.

The solid polymer electrolyte of the present invention represented by the formula (1) is very inexpensive material since aromatic rings are not contained in a main chain and a side chain. Also, the solid polymer electrolyte has excellent oxidation resistance and exhibits high durability since a hetero atom is not contained in the main chain.
In addition, the solid polymer electrolyte of the present invention has a low glass transition temperature since the solid polymer electrolyte of the present invention does not contain aromatic rings. Hence, the solid polymer electrolyte is sufficiently softened by being heated to the temperature not as high as the temperature at which deterioration of the solid polymer electrolyte, such as elimination of sulfonic acid groups and decomposition of the main chain, is caused. Therefore, when layers constituting a membrane electrode assembly are subjected to not press in order to obtain a membrane electrode assembly provided with a polymer electrolyte membrane or an electrode containing the solid polymer electrolyte, high bonding ability can be obtained without associating heat deterioration of materials constituting the layers.

Further, the solid polymer electrolyte of the present invention is able to have high density of the contained sulfonic acid group (ion-exchange capacity) since the solid polymer electrolyte of the present invention does not contain aromatic rings in the main chain and the side chain, and sulfonic acid groups being proton conducting groups are bonded to the main chain through relatively short alkylene groups or directly. Also, the solid polymer electrolyte of the present invention is able to exhibit desired proton conductivity by adjusting a copolymerization ratio of a vinyl sulfonic acid monomer having a sulfonic acid group.

In the formula (1) , it is preferable "1" is 0 (zero) from the viewpoint of proton conductivity. Also, it is preferable Y is a single bond which directly bonds the main chain with the sulfonic acid group since the density of the sulfonic acid group being the proton conductivity group can be increased.

The method for producing the solid polymer electrolyte of the present invention includes the steps of copolymerizing acrylonitrile and vinyl sulfonic acid ester, and converting the sulfonic acid ester group in the copolymer obtained by the copolymerization to the sulfonic acid group.
The method for producing the solid polymer electrolyte provided by the present invention has a few number of steps, thus the method is extremely simple.

The membrane electrode assembly for fuel cells provided with the polymer electrolyte and/or electrode containing the above-described solid polymer electrolyte of the present invention has excellent proton conductivity, and further has high bonding ability between a polymer electrolyte membrane and an electrode, and excellent durability.

### Advantageous Effects of Invention

The solid polymer electrolyte of the present invention has excellent proton conductivity and further has excellent bonding ability to adjacent layers when used as a material which constitutes a membrane electrode assembly since the glass transition temperature is low. Furthermore, the solid polymer electrolyte of the present invention significantly contributes to the cost reduction of the fuel cells since the solid polymer electrolyte of the present invention is very inexpensive. Also, the method for producing the solid polymer electrolyte of the present invention is very simple and has excellent productivity.

### Brief Description of Drawings

FIG. 1 is a view showing a synthesizing method (radical polymerization step) of a solid polymer electrolyte of the present invention.
FIG.2 is a view showing a synthesizing method (hydrolysis step) of a solid polymer electrolyte of the present invention.
FIG.3 is a cross-sectional view showing an embodiment of a membrane electrode assembly for fuel cell of the present invention.
FIG.4 is a graph showing a result of electric performance test in Example 1.

### Reference Signs List

- 1:: electrolyte membrane
- 2:: fuel electrode (anode)
- 3:: oxidant electrode (cathode)
- 4a:: fuel electrode side catalyst layer
- 4b:: oxidant electrode side catalyst layer
- 5a:: fuel electrode side gas diffusion layer
- 5b:: oxidant electrode side gas diffusion layer
- 6:: membrane electrode assembly
- 7a:: fuel electrode side separator
- 7b:: oxidant electrode side separator
- 8a:: fuel gas passage
- 8b:: oxidant gas passage
- 100:: unit cell.

### Description of Embodiments

A solid polymer electrolyte of the present invention is a copolymer represented by the following formula (1).

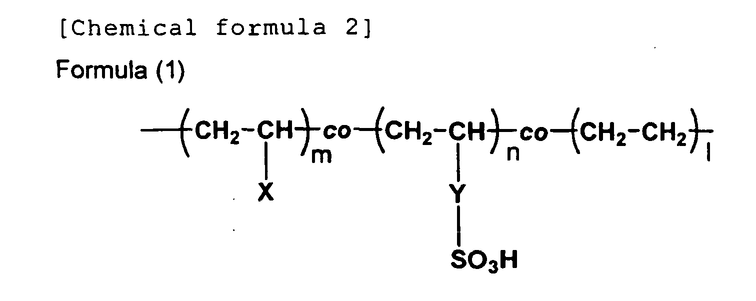

In the formula (1), X is -CN , Y is a single bend or - (CH₂)_{P}-, p is 1 to 10, m, n and 1 represent a copolymerisation ratio of each repeating unit, m+n+l=10, m>0, and n>0,1≧0.

The solid polymer electrolyte of the present invention is a vinyl monomer based cation-exchange polymer containing a main chain having a chain structure inherently consisting of a repeating unit derived from a vinyl monomer, and not containing aromatic rings and heteroatoms other than constituent atoms of electron attractive groups and sulfonic acid groups. Thus, a repeating unit having a sulfonic acid group and a repeating unit having a -CN electron attractive group (X) are essential constituent units of the solid polymer electrolyte.
The term "vinyl monomer" herein means a monomer having an ethylenic double bond. Examples of the vinyl monomer are acrylic monomers and methacrylic monomers, besides mere vinyl. In the present invention, a vinyl monomer having an aromatic group such as a styrene monomer is not used.

The repeating unit having a sulfonic acid group (hereinafter, it may be referred to as a proton-conducting unit) imparts proton conductivity to the polymer. The proton-conducting unit has a structure in which a sulfonic acid group being a proton-conducting group is bonded directly or through a relatively short linear alkyl chain having 1 to 10 carbon atoms to a main chain structure portion derived from an ethylenic double bond. Thereby, the density of the sulfonic acid group in the unit is very high. Thus, compared to S-PEEK in Patent Literature 1 or the like, the density of the sulfonic acid group in a copolymer molecule improves significantly. That is, the solid polymer electrolyte of the present invention can exhibit high proton conductivity.

From the viewpoint of the density of the sulfonic acid group in the proton-conducting unit, it is preferable that the sulfonic acid group directly bonds to the main chain. More specifically, it is preferable that Y is a single bond in the formula (1).
In the case that the sulfonic acid group bonds to the main chain through a linking group Y, p in Y[-(CH₂)_{P}-] is preferably in the range from 2 to 10, more preferably from 2 to 6, further more preferably from 2 to 4, from the viewpoint of synthesis. In particular, p = 4 is preferable from the viewpoint of the density of the sulfonic acid group and synthesis.

By using such a repeating unit having high density of the sulfonic acid group and adjusting a copolymerization ratio of the repeating unit, a solid polymer electrolyte having desired ion-exchange capacity can be obtained. For example, a solid polymer electrolyte having an ion-exchange capacity (I. E. C.) (meq/g) as high as 4 can be obtained. Specifically, the ion-exchange capacity of the solid polymer electrolyte can be adjusted in the range from 0.1 to 5. For the use of fuel cells, the ion-exchange capacity is preferably in the range from 0.5 to 3, particularly from 1 to 2.5. The term "ion-exchange capacity (meq/g)" as used herein means the number of ion-exchange group involved in ion exchange per unit resin amount, that is, the number of ion-exchange group indicated bymilli-equivalent per 1 g of an ion-exchange resin.

The other essential constituent unit, the repeating unit having an electron attractive group (hereinafter, it may be referred to as a water-insoluble unit), imparts water-insolubility to the polymer.
Remarkably high proton conductivity can be attained by using only the above-described proton-conducting unit as a repeating unit. However, a problem that the solid polymer electrolyte dissolves in water is caused. Taking the circumstances into account, a polymer electrolyte having insolubility to water as well as proton conductivity is attained by using the proton-conducting unit and the water-insoluble unit as essentialconstituentunits. In the present invention, in order to keep high density of the sulfonic acid group in the polymer imparted by the proton-conducting unit, a water-insoluble unit is designed to be low-molecular weight, more specifically, a structure in which an electron attractive group (X) directly bonds to a main chain constituting part derived from the ethylenic double bond represented by the formula (1).

The water-insoluble unit has a function to generate interaction between polymer chains due to the electron attractive group (X) directly bonded to the main chain. Due to the interaction between polymer chains, the mechanical strength of a molded article, specifically, the solid polymer electrolyte membrane, containing the solid polymer electrolyte of the present invention improves. The electron attractive group also has a function to efficiently promote copolymerization of a vinyl monomer to which the electron attractive group is bonded and a vinyl monomer having the sulfonic acid group.

The electron attractive group is -CN -CN is preferable from the viewpoint of easiness of copolymerization. Particularly, -CN is suitable from the viewpoint of chemical stability, easiness of synthesis and mechanical strength of the solid polymer electrolyte to be obtained.

A copolymerization ratio (n: m, wherein n + m = 10) of the proton-conducting unit and the water-insoluble unit is preferably 8 to 3: 2 to 7, further more preferably 7 to 4: 3 to 6 from the viewpoint of proton conductivity and water-insolubility of the solid polymer electrolyte.

The solidpolymer electrolyte of the present invention may contain a repeating unit derived from mere ethylene, if required, as shown in the formula (1). The repeating unit derived from mere ethylene is not an essential constituent unit. However, it can be introduced as a repeating unit, which constitutes the solid polymer electrolyte of the present invention, from the view point of mechanical strength. Thereby, the solid polymer electrolyte membrane obtained by using the solid polymer electrolyte of the present invention is improved in flexibility and prevented from causing the membrane cracking.

In the case that the solid polymer electrolyte contains the repeating unit derived from mere ethylene, a copolymerization ratio (n : m : 1, wherein n + m + 1 = 10) of the water-insoluble unit, the proton-conducting unit and the unit derived from mere ethylene is preferably n : m : 1 = 8 to 1 : 1 to 6 : 1 to 8, more preferably 6 to 2 : 2 to 6 : 2 to 6, further more preferably 3 to 5 : 3 to 5 : 3 to 5 from the viewpoint of ion-exchange capacity and mechanical strength of the solid polymer electrolyte.
However, from the viewpoint of ion-exchange capacity, it is preferable the solid polymer electrolyte of the present invention is composed of two essential constituent units of the proton-conducting unit and the water-insoluble unit. More specifically, it is preferable 1=0 (zero) in the formula (1).

The solid polymer electrolyte of the present invention has low glass transition temperature, typically, a glass temperature of 150 °C or less, since aromatic rings are not contained in both main chain and side chain, and particularly, the main chain inherently consists of carbon-carbon bond obtained by copolymerization of vinyl monomers. Therefore, when the solid polymer electrolyte of the present invention is contained in a polymer electrolyte membrane or an electrode (catalyst layer) for fuel cells, and a membrane electrode assembly is produced by subjecting the polymer electrolyte membrane or electrode and an electrode or polymer electrolyte membrane adjacently disposed thereon to hot press, the layer containing the solid polymer electrolyte of the present invention and the layer adjacent thereto can be closely bonded by being heated to the temperature above the glass transition temperature of the solid polymer electrolyte. Heating to the temperature not as high as the temperature at which heat deterioration of the solid polymer electrolyte of the present invention and/or other materials constituting the membrane electrode assembly is caused is not necessary. The glass transition temperature of the solid polymer electrolyte is preferably 80 °C or more from the viewpoint of stability upon operating fuel cells.

Therefore, by using the solid polymer electrolyte of the present invention, the membrane electrode assembly having high bonding ability between the polymer electrolyte membrane and the electrode, and excellent proton conductivity and water mobility between the polymer electrolyte membrane and the electrode can be obtained.
The solid polymer electrolyte of the present invention is a very inexpensive material as well as an environmentally-friendly material since the solid polymer electrolyte contains no aromatic ring and has low content of hetero atoms, particularly the solid polymer electrolyte contain no halogen atom. Therefore, by using the solid polymer electrolyte of the present invention, cost reduction of the fuel cells can be achieved and reduction of environmental burden can be further achieved.

Furthermore, since the solid polymer electrolyte of the present invention has no hetero atom and unsaturated bond in the main chain, oxidation resistance is high, long-term use is possible in the environment where radicals with very strong oxidation are present, such as working environment of fuel cells, and durability is excellent.
A polymerization form of the solid polymer electrolyte of the present invention is not particularly limited. Any of random copolymerization, graft copolymerization, block copolymerization, alternating copolymerization, and block-like random copolymerization may be used.

Hereinafter, a synthesizing method of the solid polymer electrolyte of the present invention will be described (see the following formula).
An example of the synthesizing method of the solid polymer electrolyte of the present invention is a method including steps of copolymerizing at least a vinyl monomer having an electron attractive group (X) and a vinyl monomer having sulfonic acid ester, and converting the sulfonic acid ester of a copolymer into sulfonic acid by hydrolysis or ion exchange.
Since hydrophilicity of the vinyl monomer having an electron attractive group and that of the vinyl monomer having a sulfonic acid group is quite different, it is difficult to dissolve both monomers in the same solvent to copolymerize. In the present invention, the vinyl monomer having a sulfonic acid group has the sulfonic acid group having high hydrophilicity converted into sulfonic acid ester having hydrophobicity to be soluble in the same solvent as a solvent which dissolves the monomer having an electron attractive group (X).

A synthesizing method will be described using a typical example, in which X=-CN, Y = single bond, and 1 = 0 (zero) in the above formula (1). Firstly, ethyl vinyl sulfonate and acrylonitrile are subjected to radical polymerization in a solvent such as tetrahydrofuran in the presence of a polymerization initiator such as diazo compounds and peroxides (see the following formula (A)). Herein, since oxygen prevents the polymerization reaction of ethyl vinyl sulfonate and acrylonitrile, it is preferable that the reaction atmosphere is deoxidized. It is further preferable to conduct gas replacement by inert gas such as nitrogen.
Herein, the polymerization initiator and the solvent are not particularly limited. General polymerization initiators and solvents may be used. As vinyl sulfonic acid ester, butyl vinyl sulfonate, propyl vinyl sulfonate or the like can be used besides ethyl vinyl sulfonate.

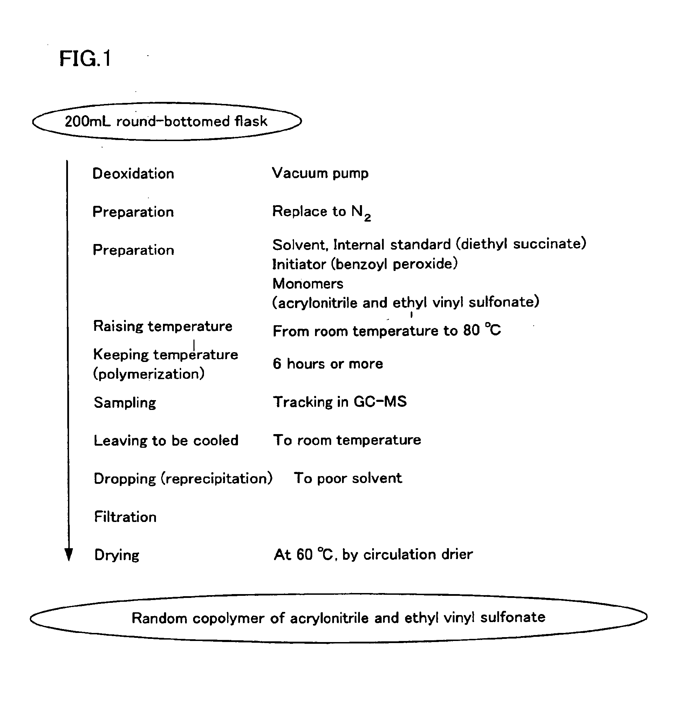

The polymerization reaction preferably proceeds by keeping temperatures from about -20 to about 90 °C for about 4 to 20 hours. In addition, it is preferable to provide an aging step after the polymerization reaction. In the aging step, a temperature is kept lower than a polymerization temperature by heating or without heating for an appropriate time and the polymerization reaction is completed.
Thus obtained copolymer is purified by a general method, for example, an appropriate combination of reprecipitation, filtration and so on (see FIG. 1).

Next, the copolymer obtained above (a copolymer of acrylonitrile and ethyl vinyl sulfonate) is added in an alkaline solution containing sodium iodide and hydrolyzed, and then converted into a copolymer of acrylonitrile and sodium vinyl sulfonate (See the following formula (B)). Herein, since oxygen prevents hydrolysis of ethyl vinyl sulfonate, it is preferable that the reaction atmosphere is deoxidized. It is further preferable to conduct gas replacement by inert gas such as nitrogen.

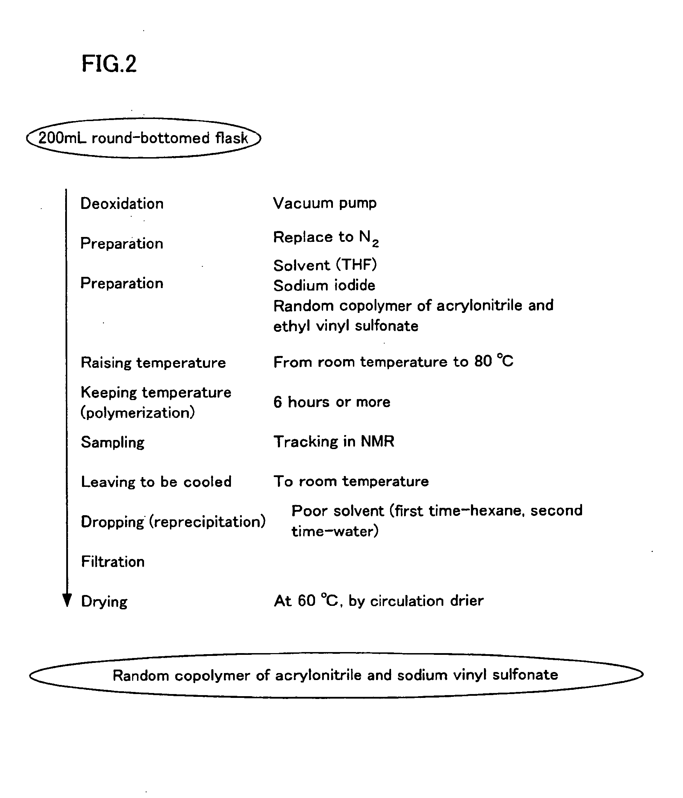

The hydrolysis reaction preferably proceeds by keeping temperatures from about room temperature to about 90 °C for about 4 to 20 hours. A hydrolyzed copolymer (a copolymer of acrylonitrile and sodium vinyl sulfonate) is purified by a general method, for example, an appropriate combination of reprecipitation, filtration and so on (see FIG. 2).

Subsequently, ion exchange is conducted by performing oxidation treatment, in which the obtained copolymer (a copolymer of acrylonitrile and sodium vinyl sulfonate) is soaked in an acid solution. Thus, a copolymer of acrylonitrile and vinyl sulfonic acid is obtained (see the following formula (C)). An acid solution is not particularly limited. Examples of the acid solution are chlorosulfonic acid, sulfuric acid and hydrochloric acid. The ion exchange may be conducted after forming the above copolymer into a molded article such as a membrane.
After the oxidation treatment, a cleaning step may be provided, if required, to remove extra acid from the copolymer. A method of cleaning in the cleaning step is not particularly limited. An example of the method is soaking the copolymer in purified water.

As aforementioned, the solid polymer electrolyte of the present invention can be synthesized in fewer steps compared to general solid polymer electrolytes, and has excellent productivity.

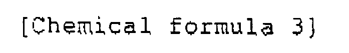

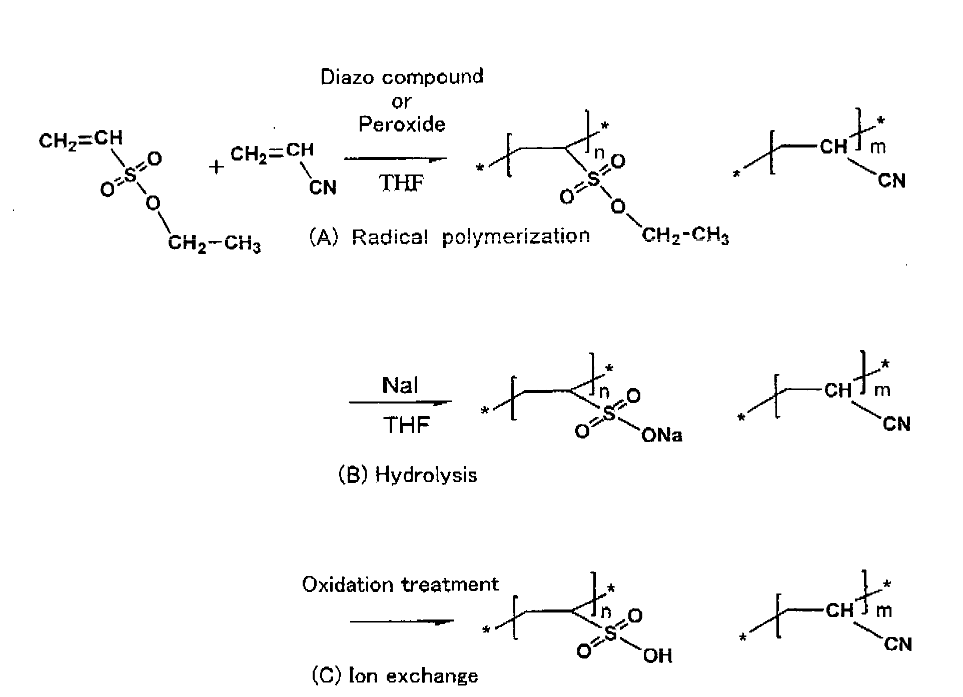

The solid polymer electrolyte of the present invention can be used in various fields. Examples of representative fields are solid polymer electrolyte membranes for fuel cells and solid polymer electrolytes contained in electrodes of fuel cells. Hereinafter, a membrane electrode assembly for fuel cell provided with a solid polymer electrolyte membrane and/or an electrode containing the solid polymer electrolyte of the present invention will be described.

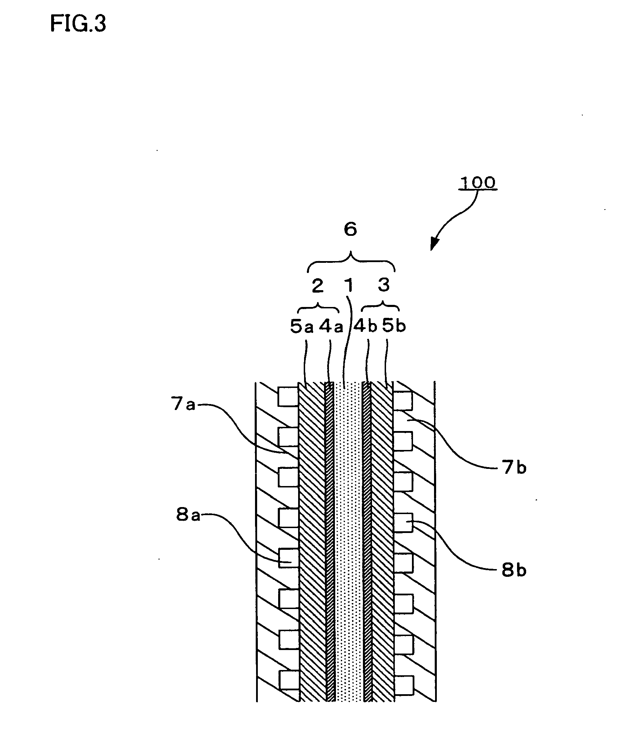

Hereinafter, a membrane electrode assembly for fuel cells (hereinafter, it may be simply referred to as a membrane electrode assembly) provided by the present invention will be described with reference to FIG. 3. FIG. 3 is a sectional view schematically showing an embodiment of a unit cell (unit cell 100) provided with a membrane electrode assembly of the present invention.
The unit cell 100 is provided with a membrane electrode assembly 6, wherein a fuel electrode (anode) 2 is disposed on one surface of a solid polymer electrolyte membrane (hereinafter, it may be simply referred to as an electrolyte membrane) 1, and an oxidant electrode (cathode) 3 is disposed on the other surface of the solidpolymer electrolyte membrane 1. The fuel electrode 2 has a structure that a fuel electrode side catalyst layer 4a and a fuel electrode side gas diffusion layer 5a are respectively laminated in this order from the electrolyte membrane 1 side. Similarly, the oxidant electrode 3 has a structure that an oxidant electrode side catalyst layer 4b and an oxidant electrode side gas diffusion layer 5b are respectively laminated in this order from the electrolyte membrane 1 side.

Each catalyst layer 4 (4a, 4b) contains a catalyst having catalyst activity for electrode reaction of each electrode (2, 3) andasolidpolymerelectrolyte (hereinafter, it may be referred to as an electrolyte for electrode) which imparts the proton conductivity to the electrode. The electrolyte for electrode has functions such as ensuring the bonding ability between the electrolyte membrane and the electrode and an immobilization of the catalyst, besides imparting the proton conductivity. In this embodiment, both electrodes (the fuel electrode and the oxidant electrode) have a structure that the catalyst layer and the gas diffusion layer are laminated. However, both electrodes may have a single layer structure including the catalyst layer alone or a structure provided with a function layer other than the catalyst layer and the gas diffusion layer.

The membrane electrode assembly 6 is interposed between separators 7a and 7b to constitute the unit cell 100. Fuel gas passages 8a and oxidant gas passages 8b are defined by grooves which form passages of reaction gas (fuel gas, oxidant gas) on one surface of each separator 7a and 7b, and outer side of the fuel electrode 2 or the oxidant electrode 3. The fuel gas passages 8a are passages to supply fuel gas (gas which contains or generates hydrogen) to the fuel electrode 2. The oxidant gas passages 8b are passages to supply oxidant gas (gas which contains or generates oxygen) to the oxidant electrode 3.

The solid polymer electrolyte of the present invention can be used as an electrolyte for electrode which constitutes the catalyst layers of each electrode, besides being used as a material constituting the solid polymer electrolyte membrane in the membrane electrode assembly.
In the case of using the solid polymer electrolyte as the material constituting the solid polymer electrolyte membrane, the solid polymer electrolyte is appropriately formed into a membrane in combination of other components such as other solid polymer electrolytes, if required. The thickness of the membrane is not particularly limited, but may be from about 10 to 200 µm. A method of producing the membrane is also not particularly limited. Examples of the method are cast methods including casting and coating a solution containing the solid polymer electrolyte, and drying, and extrusion molding methods.

In the case of using the solid polymer electrolyte as the electrolyte for electrode, the solid polymer electrolyte is used together with the catalyst having catalyst activity for the electrode reaction in each electrode to form the catalyst layer. The catalyst layer can be formed using a catalyst ink containing the polymer electrolyte and the catalyst.
As the catalyst, generally, a catalyst in which a catalytic component is carried by a conducting particle can be used. The catalytic component is not particularly limited if a catalytic component has catalyst activity to the oxidation reaction of fuels in the fuel electrode or the reduction reaction of oxidants in the oxidant electrode. A catalytic component generally used for solid polymer electrolyte fuel cells can be used. For example, platinum and alloys of platinum and metal such as ruthenium, iron, nickel, manganese, cobalt copper or the like can be used.
As a conducting particle being a catalyst carrier, conductive carbon materials including carbon particles and carbon fibers such as carbon black, and metallic materials such as metallic particles and metallic fibers can be used.

The catalyst ink can be obtained by dissolving or dispersing the above catalyst and electrolyte for electrode in a solvent. The solvent of the catalyst ink may be appropriately selected. Examples are alcohols such as methanol, ethanol and propanol, organic solvents such as N-methyl-2-pyrolidone (NMP) and dimethyl sulfoxide (DMSO), mixtures thereof, and mixtures of these organic solvents and water. The catalyst ink may contain other components such as a binder and a water-repellent resin, if required, besides the catalyst and the electrolyte.

A method of forming the catalyst layer is not particularly limited. For example, the catalyst layer may be formed on a surface of a gas diffusion layer sheet by coating the catalyst ink on the surface of the gas diffusion layer sheet followed by drying, or the catalyst layer may be formed on a surface of the electrolyte membrane by coating the catalyst ink on the surface of the electrolyte membrane followed by drying. Alternatively, the catalyst ink is coated on a surface of a transfer substrate, and then dried to produce a transfer sheet, and the transfer sheet is bound together with the electrolyte membrane or the gas diffusion sheet by carrying out hot press or the like, thereby the catalyst layer may be formed on the surface of the electrolyte membrane or the gas diffusion layer sheet.

A coating and drying method of the catalyst ink may be appropriately selected. Examples of the coating methods are spraying methods, screen printing methods, doctor blade methods, gravure printing methods and die-coating methods. Examples of the drying methods are methods of drying under reduced pressure, drying by heating and drying by heating under reduced pressure. Specific conditions in the method of drying under reduced pressure and drying by heating are not limited, and may be set appropriately.
The amount of coating of the catalyst ink varies by a composition of the catalyst ink, catalytic performance of catalytic metal used as electrode catalyst and so on. The amount of catalytic component per unit area may be from about 0.1 to 2.0 mg/cm². Also, the thickness of the catalyst layer is not particularly limited, but may be from about 1 to 50 µm.

The gas diffusion layer sheet, which forms the gas diffusion layer, may be made of a conductive porous body which has gas diffuseness sufficient to efficiently supply gas to the catalyst layer, conductive property, and strength required as material constituting the gas diffusion layer. Examples are conductive porous bodies including carbonaceous porous bodies such as carbon paper, carbon cloth and carbon felt; and metallic mesh or metallic porous body constituted by metal such as titanium, aluminum, copper, nickel, nickel chrome alloys, copper, copper alloys, silver, aluminum alloys, zinc alloys, lead alloys, titanium, niobium, tantalum, iron, stainless, gold and platinum,. The thickness of the conductive porous body is preferably from about 50 to 500 µm.

The gas diffusion layer sheet may be formed with a single layer of the above conductive porous body. However, a water-repellent layer can be provided on the surface which faces to the catalyst layer. The water-repellent layer generally has a porous structure containing conductive particulates such as carbon particles and/or carbon fibers and water-repellent resins such as polytetrafluoroethylene (PTFE). The water-repellent layer is not always necessary. However, the water-repellent layer has advantages of being able to improve electrical interengagement between the catalyst layer and the gas diffusion layer in addition to being able to increase drainage ability of the gas diffusion layer while reasonably keeping the amount of water contained in the catalyst layer and the electrolyte membrane.

A method of forming the water-repellent layer on the conductive porous body is not particularly limited. For example, a water-repellent layer ink, in which the conductive particulates such as carbon particles, the water-repellent resin and other components, if necessary, are mixed into a solvent including an organic solvent such as ethanol, propanol and propylene glycol, water or a mixture thereof, is coated at least on the surface of the conductive porous body, which faces the catalyst layer, and then dried and/or baked. The thickness of the water-repellent layer may be generally from about 1 to 50 µm. Examples of a method of coating the water-repellent layer ink on the conductive porous body are screen printing methods, spraying methods, doctor blade methods, gravure printing methods and die-coating methods.

In addition, the conductive porous body may be processed by impregnating and coating the water-repellent resin such as polytetrafluoroethylene on the surface which faces the catalyst layer by means of a bar coater or the like in order to efficiently discharge moisture in the catalyst layer out of the gas diffusion layer.
The electrolyte membrane and the gas diffusion layer sheet having the catalyst layer formed by the above method are bound each other by appropriately being laminated and subjected to hot press. Thereby, the membrane electrode assembly can be obtained.

The obtained membrane electrode assembly is further interposed between separators, thereby, a unit cell is formed. Examples of the separator are carbon separators made of a carbon/resin composite, which contain carbon fibers at high concentration, and metallic separators using metallic materials. Examples of the metallic separators are separators made of metallic materials having excellent corrosion-resistance and separators subjected to coating which increases corrosion-resistance by covering the surface with carbon or metallic materials having excellent corrosion-resistance.

The membrane electrode assembly of the present invention may contain the solid polymer electrolyte of the present invention in at least one of the solid polymer electrolyte membrane and the electrode. The solid polymer electrolyte according to the present invention may be contained either in the electrolyte membrane alone or in the electrode alone, or both in the electrolyte membrane and electrode. In the case of using the solid polymer electrolyte of the present invention in one of the solid polymer electrolyte membrane and the electrode, as the other solid polymer electrolyte, other general solid polymer electrolytes may be used. Examples are fluorine polymer electrolytes such as perfluorocarbon sulfonic acid, and hydrocarbon polymer electrolytes having proton-conducting groups such as a sulfonic acid group, a phosphoric acid group and a carboxylic acid group introduced into hydrocarbon polymer electrolytes such as polyether ether ketone, polyether ketone and polyether sulfone.

### Examples

### [Example 1]

### (Synthesis of solid polymer electrolyte)

### <Synthesis of solid polymer electrolyte precursor I>

Firstly, deoxidation was carried out in a reaction system by means of a vacuum pump, and then, gas replacement was carried out with nitrogen. Next, diethyl succinate (solvent, internal standard), benzoyl peroxide (polymerization initiator), acrylonitrile and ethyl vinyl sulfonate (monomers) were charged in the reaction system. Then, the temperature of the reaction system was raised from room temperature to 80 °C and kept for 6 hours or more to polymerize acrylonitrile and ethyl vinyl sulfonate. Thus, a random copolymer of acrylonitrile and ethyl vinyl sulfonate (solid polymer electrolyte precursor I) was obtained.

A part of a reaction solution was taken as a sample, and the rest of the solution was left to be cooled to room temperature. Then, the reaction solution was dropped into poor solvent (water) to reprecipitate the obtained solid polymer electrolyte precursor I. The solid polymer electrolyte precursor I was filtered out from the solution of the reprecipitated solid polymer electrolyte precursor I with a filter paper. The extracted solid polymer electrolyte precursor I was dried at 60 °C by means of a circulation drier (see FIG. 1).
The reaction solution taken by the above sampling was subjected to composition and structural analyses of the solid polymer electrolyte precursor I by means of GC-MS.

### <Synthesis of solid polymer electrolyte precursor II>

Firstly, deoxidation was carried out in a reaction system by means of a vacuum pump, and the, gas replacement was carried out with nitrogen. Next, tetrahydrofuran (solvent), sodium iodide and the solid polymer electrolyte precursor I were charged in the reaction system. Then, the temperature of the reaction system was raised from room temperature to 80 °C and kept for 6 hours or more to hydrolyze the random copolymer of acrylonitrile and ethyl vinyl sulfonate. Thus, a random copolymer of acrylonitrile and sodium vinyl sulfonate (solid polymer electrolyte precursor II) was obtained.

A part of a reaction solution was taken as a sample, and the rest of the solution was left to be cooled to room temperature. Then, the reaction solution was dropped into poor solvent (hexane) to reprecipitate the obtained solid polymer electrolyte precursor II. The solid polymer electrolyte precursor II was filtered out from the solution of the reprecipitated solid polymer electrolyte precursor II with a filter paper. The extracted solid polymer electrolyte precursor II was dried at 60 °C by means of a circulation drier (See FIG. 2).
The reaction solution taken by the above sampling was subjected to composition and structural analyses of the solid polymer electrolyte precursor II by means of NMR.

### <Synthesis of solid polymer electrolyte>

The above obtained solid polymer electrolyte precursor II (random copolymer of acrylonitrile and sodium vinyl sulfonate) was dissolved in dimethylformamide and casted and coated to form a membrane.
By soaking the obtained membrane made of the solid polymer electrolyte precursor II into 0.1 mol/l of chlorosulfuric acid (60 °C, 120 minutes), sodium sulfonate was converted into sulfonic acid by ion exchange.

### (Characteristic evaluation)

The following items of the above obtained solid polymer electrolyte membrane of Example 1 were evaluated. Results are shown in Table 1.
(1) Ion-exchange capacity (meq/g) (1. E. C.);
(2) Proton conductivity (S/cm), at 90 RH% and at 60 RH%;
(3) The number of water molecule per -SO₃H molecule when the solid polymer electrolyte membrane is soaked in water at 80 °C;
(4) Glass transition temperature (Tg, °C); and
(5) Fenton resistance.
The term "Fenton resistance" of (5) herein means weight retention rate (%) before and after Fenton test, in which a membrane is soaked in an aqueous solution having a concentration of Fe²⁺ of 4 ppm and H₂O₂ of 3 % at 80 °C for 2 hours. That is, weight retention rate (%) = [(weight after Fenton test)/ weight before Fenton test].

### [Comparative example 1]

A membrane made of sulfonated polyether ether ketone represented by the following Formula (2) was subjected to the characteristic evaluations (1) to (5) similarly as in Example 1. Results are shown in Table 1.

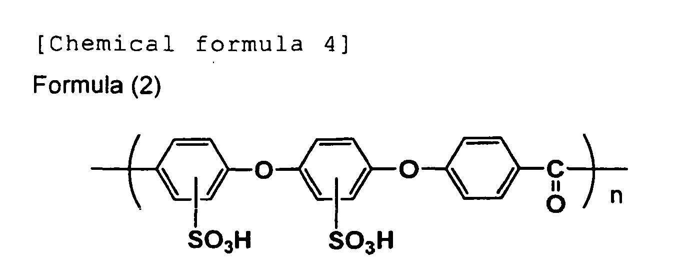

[Table 1]

**Table 1**

| Membrane property | | Example 1 | Comparative Example 1 |
|---|---|---|---|
| I. E. C. [meq/g] | | 1 | 1.3 |
| Proton conductivity [S/cm] | 90 RH% | 0.014 | 0.014 |
| | 60 RH% | 0.00034 | 0.00024 |
| H₂O /-SO₃H (in water at 80 °C) | | 59 | 17 |
| Tg [deg. C] | | 96 | 150 |
| Fenton resistance | | 87 | 0 |

The electrolyte membrane in Example 1 using the solid polymer electrolyte of the present invention has small ion-exchange capacity compared to the electrolyte membrane in Comparative example 1 using the aromatic hydrocarbon electrolyte. However, as shown in Table 1, the electrolyte membrane in Example 1 exhibited proton conductivity equivalent to that of Comparative example 1 at 90 RH%, and higher proton conductivity than that of Comparative example 1 at 60 RH%. It is considered that high proton conductivity was exhibited even by a small amount of -SO₃H since the amount of hydration per molecule of -SO₃H was three or more times higher.

It can be understood that hot press at low temperature is possible upon producing the membrane electrode assembly using the electrolyte membrane of Example 1, since the glass transition temperature of the electrolyte membrane of Example 1 is low, around 100 °C, while the glass transition temperature of the electrolyte membrane made of the aromatic hydrocarbon electrolyte of Comparative example 1 is high, 150 °C. More specifically, by using the solid polymer electrolyte of the present invention, a membrane electrode assembly having excellent bonding ability between layers can be obtained without causing heat deterioration of the solid polymer electrolyte itself and/or other constituent materials upon producing the membrane electrode assembly.

Further, the electrolyte membrane of Example 1 had high weight retention, 87 %, and exhibited excellent oxidation resistance, while the electrolyte membrane of Comparative example 1 was fully decomposed and dissolved in the Fenton test. This is because the electrolyte membrane of Example 1 has no hetero atom such as oxygen in the main chain and thus has excellent acid resistance, while oxygen atoms in the main chain of the electrolyte in the membrane of Comparative example 1 is attacked by radicals so that the main chain is cleaved, and thereby, the electrolyte is decomposed.

### (Evaluation of power generation performance)

### <Production of single cell for fuel cell>

A commercial Pt/C catalyst (rate of supported Pt: 50 wt%), aperfluorocarbon sulfonic acid resin (productname: Nafion) and a solvent (ethanol) were agitated and mixed so that a weight ratio of Pt: perfluorocarbon sulfonic acid resin is 1: 1. Thus a catalyst ink was prepared.

The catalyst ink was coated with a spray on both surfaces of the solid polymer electrolyte membrane of Example 1 obtained as above, so that a Pt amount per unit area of the catalyst layer is 0.5 mg/cm². The ink was vacuum-dried at 80 °C. Thus, a catalyst layer was formed.

The obtained assembly of a catalyst layer, an electrolyte membrane and a catalyst layer in this order (catalyst layer/electrolyte membrane/catalyst layer assembly) was interposed between two sheets of carbon paper for gas diffusion layer, and subjected to hot press (press pressure: 2MPa; press temperature: 100 °C). Thereby, a membrane electrode assembly was obtained.
The obtained membrane electrode assembly was interposed between two sheets of carbon separator (gas passage: serpentine), thereby, a unit cell was produced.

### <Power generation test>

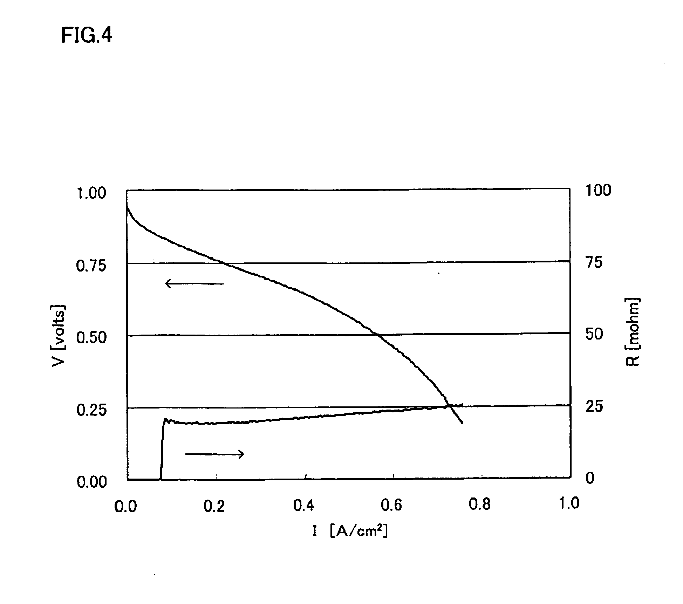

The unit cell produced as above was subjected to power generation evaluation under the following conditions. Results are shown in FIG. 4.

### <Condition of power generation evaluation>

Fuel (hydrogen gas): stoiciometry 1.5 (100 RH%)
Oxidant (air): stoiciometry 3.0 (100 RH%)
Cell temperature: 80 °C

As shown in FIG. 4, the membrane electrode assembly using the solid polymer electrolyte membrane formed of the solid polymer electrolyte of the present invention has excellent power generation performance required for fuel cells.

## Claims

1. A solid polymer electrolyte, which is a copolymer represented by the following formula (1): 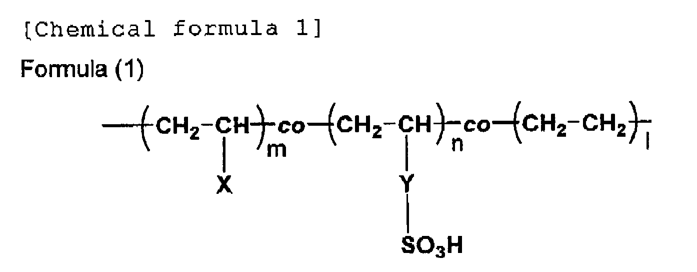 wherein X is -CN, Y is a single bond or -(CH₂) ₚ-, P is 1 to 10, m, n and 1 represent a copolymerisation ratio of each repeating unit, m+n+1=10, m>0, n>0, 1≧0 and wherein n:m = 9 to 2 : 1 to 8.

2. The solid polymer electrolyte according to claim 1, wherein 1 is 0 in the formula (1).

3. The solid polymer electrolyte according to claim 1 or 2, wherein Y is a single bond in the formula (1).

4. The solid polymer electrolyte according to claim 1, wherein n:m = 8 to 3 : 1 2 to 7.

5. The solid polymer electrolyte according to claim 1, wherein n:m = 7 to 4 : 3 to 6.

6. The solid polymer electrolyte according to claim 1, wherein n : m : 1 = 8 to 1 : 1 to 6 : 1 to 8.

7. A method for producing a solid polymer electrolyte as defined in claim 1 comprising the steps of:
copolymerizing acrylonitrile and vinyl sulfonic acid ester; and
converting a sulfonic acid ester group in a copolymer obtained by the copolymerization step to a sulfonic acid group.

8. A membrane electrode assembly for fuel cell provided with a polymer electrolyte membrane and/or an electrode containing the solid polymer electrolyte defined by any of claims 1 to 6.

9. The membrane electrode assembly for fuel cell according to claim 8, wherein the polymer electrolyte membrane consists of the solid polymer electrolyte defined by any of claims 1 to 6.

## Patentansprüche

1. Fest-Polymerelektrolyt, welcher ein durch die folgende Formel (1) dargestelltes Copolymer ist: 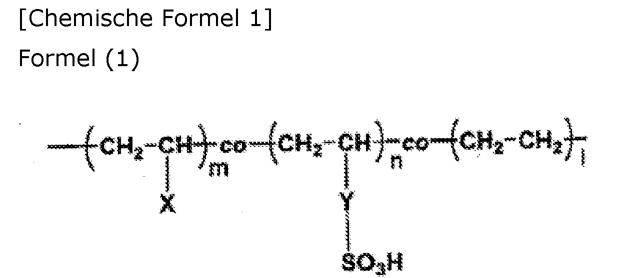 wobei X -CN ist, Y eine Einfachbindung oder -(CH₂)ₚ- ist, p 1 bis 10 ist, m, n und I ein Copolymerisationsverhältnis von jeder Wiederholungseinheit darstellen, m + n + I = 10, m > 0, n > 0, I ≧ 0 und wobei n : m = 9 bis 2 : 1 bis 8 ist.

2. Fest-Polymerelektrolyt nach Anspruch 1, wobei I in der Formel (1) 0 ist.

3. Fest-Polymerelektrolyt nach Anspruch 1 oder 2, wobei Y in der Formel (1) eine Einfachbindung ist.

4. Fest-Polymerelektrolyt nach Anspruch 1, wobei n : m = 8 bis 3 : 2 bis 7 ist.

5. Fest-Polymerelektrolyt nach Anspruch 1, wobei n : m = 7 bis 4 : 3 bis 6 ist.

6. Fest-Polymerelektrolyt nach Anspruch 1, wobei n : m : I = 8 bis 1 : 1 bis 6 : 1 bis 8 ist.

7. Verfahren zur Herstellung eines Fest-Polymerelektrolyten nach Anspruch 1, umfassend die Schritte:
Copolymerisieren von Acrylnitril und Vinylsulfonsäureester; und
Konvertieren einer Sulfonsäureestergruppe in einem Copolymer, das durch den Copolymerisationsschritt erhalten ist, zu einer Sulfonsäuregruppe.

8. Membranelektroden-Anordnung für eine Brennstoffzelle, die mit einer Polymerelektrolytmembran und/oder einer Elektrode, die den Fest-Polymerelektrolyt nach einem der Ansprüche 1 bis 6 enthält, ausgestattet ist.

9. Membranelektroden-Anordnung für eine Brennstoffzelle nach Anspruch 8, wobei die Polymerelektrolytmembran aus dem Fest-Polymerelektrolyten nach einem der Ansprüche 1 bis 6 besteht.

## Revendications

1. Electrolyte solide polymère, qui est un copolymère représenté par 1a formule (1) suivante : 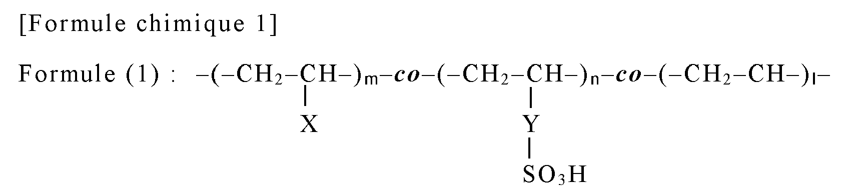 dans laquelle X représente un groupe cyano -CN, Y représente une liaison simple ou un fragment de formule -(CH₂)ₚ- où l'indice p vaut de 1 à 10, et les indices m, n et 1 représentent les rapports de copolymérisation de chacun des motifs répétés, qui respectent les relations suivantes : m + n + 1 = 10, m 0, n > 0 et 1 ≥ 0, étant entendu que le rapport n/m vaut (9-2)/(1-8).

2. Electrolyte solide polymère conforme à la revendication 1, dans lequel, dans la formule (1), l'indice 1 vaut 0.

3. Electrolyte solide polymère conforme à la revendication 1 ou 2, dans lequel, dans la formule (1), Y représente une liaison simple.

4. Electrolyte solide polymère conforme à la revendication 1, dans lequel le rapport n/m vaut (8-3)/(2-7).

5. Electrolyte solide polymère conforme à la revendication 1, dans lequel le rapport n/m vaut (7-4)/(3-6).

6. Electrolyte solide polymère conforme à la revendication 1, dans lequel les proportions n/m/l valent (8-1)/(1-6)/(1-8).

7. Procédé de préparation d'un électrolyte solide polymère conforme à la revendication 1, lequel procédé comporte les étapes suivantes :
faire copolymériser de l'acrylonitrile et un ester d'acide sulfonique vinylique,
et convertir en groupes sulfo les groupes sulfonate présents dans le copolymère obtenu lors de l'étape de copolymérisation.

8. Ensemble membrane-électrode pour pile à combustible, comportant une membrane électrolyte en polymère et/ou une électrode et contenant un électrolyte solide polymère conforme à l'une des revendications 1 à 6.

9. Ensemble membrane-électrode pour pile à combustible, conforme à la revendication 8, dans lequel la membrane électrolyte en polymère est constituée d'un électrolyte solide polymère conforme à l'une des revendications 1 à 6.
